# EUROPÄISCHE PATENTANMELDUNG

(11) **EP 1 508 950 A2**
(43) Veröffentlichungstag der Anmeldung: **23.02.2005**
(21) Anmeldenummer: 04016502.9
(22) Anmeldetag: 13.07.2004
(51) Int. Cl.: H02H 9/04

(54) **Schaltungsanordnung zum Schutz gegen Stoss-Spannungen**

(30) Priorität: 20.08.2003 DE 10338921
(71) Anmelder: Patent-Treuhand-Gesellschaft für elektrische Glühlampen mbH, 81543 München (DE)
(72) Erfinder: Storm, Arwed, 85221 Dachau (DE); Werni, Horst, 80937 München (DE)

(57) **Zusammenfassung**

Die vorliegende Erfindung betrifft eine Schaltungsanordnung zum Schutz mindestens einer aus einem Spannungsnetz zu versorgenden Einheit gegen Stoßspannungen mit einem Eingang mit einem ersten und einem zweiten Eingangsanschluss, an den eine mit einer Stoßspannung belastete Spannung, die der Netzspannung entspricht oder aus der Netzspannung abgeleitet wurde, koppelbar ist, einem Ausgang mit einem ersten und einem zweiten Ausgangsanschluss, an den die zu schützende Einheit koppelbar ist; einer Schutzschaltung, die zwischen den ersten und den zweiten Eingangs- oder Ausgangsanschluss gekoppelt ist, wobei die Schutzschaltung eine Begrenzungsvorrichtung aufweist, die ausgelegt ist, die an ihr anliegende Spannung auf einen vorgebbaren Wert zu begrenzen, wobei die Schutzschaltung weiterhin eine Schaltervorrichtung (10) umfasst, die ein Schaltelement (10) und eine Ansteuerungsschaltung für das Schaltelement (10) umfasst, wobei das Schaltelement (10) als Halbleiterbauelement ausgebildet ist, und wobei die Schaltervorrichtung (10) seriell zu der Begrenzungsvorrichtung (12) angeordnet ist und ausgelegt ist, bei einem vorgebbaren ersten Auslösekriterium auf leitend zu schalten und bei einem vorgebbaren zweiten Auslösekriterium auf sperrend zu schalten.

## Beschreibung

### Technisches Gebiet

Die vorliegende Erfindung betrifft eine Schaltungsanordnung zum Schutz mindestens einer aus einem Spannungsnetz zu versorgenden Einheit gegen Stoßspannungen mit einem Eingang mit einem ersten und einem zweiten Eingangsanschluss, an den eine mit einer Stoßspannung belastete Spannung, die der Netzspannung entspricht oder aus der Netzspannung abgeleitet wurde, koppelbar ist, einem Ausgang mit einem ersten und einem zweiten Ausgangsanschluss, an den die zu schützende Einheit koppelbar ist, einer Schutzschaltung, die zwischen den ersten und den zweiten Eingangs- oder Ausgangsanschluss gekoppelt ist, wobei die Schutzschaltung eine Begrenzungsvorrichtung aufweist, die ausgelegt ist, die an ihr anliegende Spannung auf einen vorgebbaren Wert zu begrenzen.

### Stand der Technik

Der vorliegenden Erfindung liegt generell die Problematik zugrunde, Geräte gegen Stoßspannungen, wie sie beispielsweise beim Einschalten von Motoren, durch Blitzschlag oder dergleichen auf einem Spannungsnetz entstehen, zu schützen. Derartige Stoßspannungen, die auch als sogenannte Surge-Impulse bekannt sind, können bis zu 3.000 V betragen und stellen daher eine potentielle Gefährdung empfindlicher elektronischer Geräte oder elektronischer Geräte mit empfindlicher Eingangsstufe, beispielsweise elektronische Vorschaltgeräte für die Beleuchtungstechnik, dar. Details zu dieser Thematik können auch der EN61547, Absatz 5.7 entnommen werden.

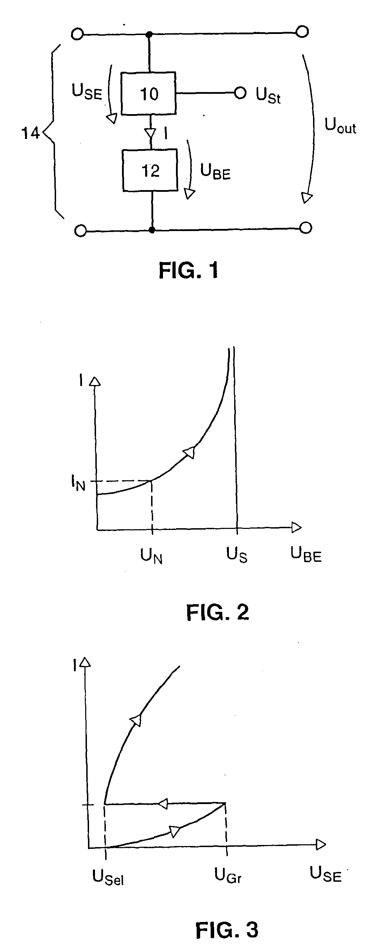

Bei elektronischen Vorschaltgeräten ist es bekannt, Boost-Konverter einzusetzen, die zum Schutz vor Stoßspannungen bis ca. 1500 V keine zusätzlichen Schutzmaßnahmen benötigen. Weiterhin wird der Schutz mit Varistoren praktiziert. Ein Varistor bietet jedoch keine zufriedenstellende Lösung, da, wie mit Bezug auf Figur 2 noch näher ausgeführt werden wird, seine Kennlinie "zu weich" ist und sich daher bereits im Betrieb, spätestens jedoch bei Netzschieflast, beträchtliche Verluste ergeben können.

Aus dem Bereich der Telephonie ist es weiterhin bekannt, zum Schutz vor Stoßspannungen Sidacs zu verwenden, deren Stromspannungskennlinie im Prinzip derjenigen in Figur 3 gleicht und auf die nachfolgend ebenfalls noch detaillierter eingegangen werden wird. Im Bereich der Telephonie bietet diese Lösung einen ausreichenden Schutz, da die Impedanz der Eingangsspannungsquelle ausreichend groß ist, um bei einem Sidac in eingeschaltetem Zustand, das heißt im leitenden Zustand, den Kurzschlußstrom hinreichend zu begrenzen. Für viele andere Anwendungen, die aus dem üblichen Spannungsnetz und nicht aus dem Telefonnetz gespeist werden, bietet dies infolge der zu geringen Impedanz keine praktikable Lösung: Würde man dort zum Schutz einen Sidac verwenden, würde infolge der zu geringen Impedanz die übliche Sicherung aktiviert werden, die dann von Hand zurückgestellt werden müsste oder durch eine andere Sicherung ersetzt werden müsste.

### Darstellung der Erfindung

Der vorliegenden Erfindung liegt deshalb die Aufgabe zugrunde, die eingangs genannte Schaltungsanordnung derart weiterzubilden, dass ein zuverlässiger Schutz gegen Stoßspannungen erzielt wird, ohne dass nach Auftreten einer Stoßspannung manuelles Eingreifen nötig wäre, um die zu versorgende Einheit wieder mit Spannung zu versorgen.

Die Aufgabe wird gelöst durch eine Schaltungsanordnung mit den Merkmalen von Patentanspruch 1.

Der Erfindung liegt die Erkenntnis zugrunde, dass die obige Aufgabe dadurch gelöst werden kann, dass die Schutzschaltung neben der Begrenzungsvorrichtung eine Schaltervorrichtung umfasst. Dabei umfasst Letztere ein Schaltelement und eine Ansteuerungsschaltung für das Schaltelement, wobei, um eine ausreichend präzise Dimensionierung sicherzustellen, das Schaltelement als Halbleiterbauelement ausgebildet ist. Ein Schaltelement, realisiert als Halbleiterbauelement, bietet überdies den Vorteil, dass die Sensibilitäten im Hinblick auf eine Spannungsamplitude beziehungsweise eine zeitliche Änderung einer Spannung unabhängig voneinander und präzise innerhalb einer vorgebbaren Toleranz justiert werden können.

Die Schaltervorrichtung und die Begrenzungsvorrichtung werden nunmehr seriell angeordnet und so ausgelegt, dass bei einem vorgebbaren ersten Auslösekriterium die Schaltervorrichtung leitend geschaltet wird und bei dem vorgebbaren zweiten Auslösekriterium sperrend.

Durch die serielle Anordnung der Schalter- und der Begrenzungsvorrichtung fließt, solange der Schalter nicht anspricht, das heißt nicht auf leitend schaltet bzw. geschaltet wird, kein Strom durch die Schutzschaltung. Damit kann, wie im Stand der Technik, als Begrenzungsvorrichtung ein Varistor verwendet werden, der jedoch - und nunmehr im Gegensatz zum Stand der Technik - im Normalbetrieb keinerlei Verluste erzeugt, da infolge des Sperrens der Schaltervorrichtung kein Strom durch die Schutzvorrichtung fließt. In serieller Anordnung zur Begrenzungsvorrichtung kann nunmehr als Schaltervorrichtung beispielsweise ein Sidac verwendet werden, der nunmehr - im Gegensatz zum Stand der Technik - keinen Kurzschluss mehr erzeugt, da die Impedanz der Begrenzungsvorrichtung ein Kurzschließen verhindert. Eine Rücksetzung, das heißt ein Abschalten der Schutzvorrichtung, findet automatisch statt, denn wenn die Stoßspannung zurückgeht, unterschreitet beispielsweise der die Schutzvorrichtung durchfließende Strom einen vorgebbaren Grenzwert, wodurch das Schaltelement wieder in den sperrenden Zustand übergeht. Die obigen Erkenntnisse wurden am Beispiel einer Realisierung der Begrenzungsvorrichtung als Varistor und einer Realisierung der Schaltervorrichtung als Sidac dargestellt. Die vorliegende Erfindung umfasst jedoch eine Vielzahl weiterer Realisierungsmöglichkeiten, auf die im Nachfolgenden noch genauer eingegangen wird.

So zeichnet sich eine bevorzugte Ausführungsform dadurch aus, dass dass das erste Auslösekriterium der Anstieg einer Spannung, insbesondere der an der Schaltervorrichtung (10) anliegenden Spannung, über einen ersten vorgebbaren Spannungswert und/oder die Anstiegsgeschwindigkeit einer Spannung, insbesondere der an der Schaltervorrichtung (10) anliegenden Spannung, über einen ersten vorgebbaren Wert ist. Letzteres bietet die Möglichkeit, bereits bei Erkennen einer verdächtigen Flanke die Schutzschaltung ansprechen zu lassen, das heißt bevor schädliche hohe Spannungswerte erreicht werden.

Das zweite Auslösekriterium kann der Abfall des durch die Schaltervorrichtung (10) fließenden Stroms unterhalb einem zweiten vorgebbaren Stromwert ist und/oder die Abfallgeschwindigkeit einer Spannung, insbesondere der an der Schaltervorrichtung (10) anliegenden Spannung, unterhalb einem zweiten vorgebbaren Wert und/oder eine vorgebbare Zeitdauer abgelaufen ist.

Die Ansteuerschaltung kann einerseits ausgelegt sein, das Schaltelement entsprechend der an der Schaltervorrichtung wirkenden elektrischen Größen, insbesondere Spannung, Strom, Spannungsänderungsgeschwindigkeit, Stromänderungsgeschwindigkeit, anzusteuern.

Alternativ kann die Ansteuerschaltung vom Schaltelement selbst gebildet werden. Dies hat den Vorteil, dass die Ansteuerschaltung entfallen kann.

Die Begrenzungsvorrichtung wird vorzugsweise realisiert als der bereits erwähnte Varistor und/oder ein Ohmscher Widerstand und/oder eine Zenerdiode.. Das Schaltelement wird vorzugsweise realisiert als Triac und/oder als Diac und/oder als Sidac und/oder als TSPD (Thyristor Surge Protection Device) und/oder als Thyristor und/oder als IGBT (Insolated Gate Bipolar Transistor) und/oder als Supressordiode und/oder als Transildiode. Nicht geeignet ist ein Gasableiter, da dieser funktionsbedingt nicht genau genug hinsichtlich seiner Ein- und Ausschaltkriterien dimensioniert werden kann. Ein unzureichender Schutz wäre die Folge

Bevorzugt ist die Begrenzungsvorrichtung für Dauerbetrieb auf einen Spannungswert ausgelegt, der unter der in Betrieb an der Schutzvorrichtung anliegenden maximalen Spannung ohne Stoßspannung liegt. Da vorliegend die Begrenzungsvorrichtung nur kurzzeitig belastet wird, insbesondere zu der Zeit, zu der das Schaltelement auf leitend schaltet oder geschaltet wird, im Dauerbetrieb hingegen quasi nicht belastet wird, ergibt sich diese vorteilhafte, kostensenkende Methode der Unterdimensionierung. Bevorzugt wird eine erfindungsgemäße Schaltungsanordnung verwendet in einem elektrischen Wandler, insbesondere in einem elektrischen Vorschaltgerät für die Beleuchtungstechnik.

Weitere vorteilhafte Ausführungsformen ergeben sich aus den Unteransprüchen.

### Kurze Beschreibung der Zeichnungen

Im Nachfolgenden werden nunmehr Ausführungsbeispiele der vorliegenden Erfindung unter Bezugnahme auf die beigefügten Zeichnungen näher beschrieben. Es stellen dar:
- Figur 1: in schematischer Darstellung eine erfindungsgemäße Schaltungsanordnung;
- Figur 2: in prinzipieller Darstellung die Stromspannungskennlinie einer in einer erfindungsgemäßen Schaltungsanordnung verwendbaren Begrenzungsvorrichtung;
- Figur 3: in prinzipieller Darstellung die Stromspannungskennlinie eines in einer erfindungsgemäßen Schaltungsanordnung verwendbaren Schaltelements;
- Figur 4: ein erstes Ausführungsbeispiel einer erfindungsgemäßen Schaltungsanordnung;
- Figur 5: ein zweites Ausführungsbeispiel einer erfindungsgemäßen Schaltungsanordnung;
- Figur 6a: den zeitlichen Verlauf einer an einer erfindungsgemäßen Schaltungsanordnung anliegenden mit einer Stoßspannung beaufschlagten Netzspannung;
- Figur 6b: einen Vergleich des zeitlichen Verlaufs der Ausgangsspannung Uₒᵤₜ einer erfindungsgemäßen Schaltungsanordnung bei Ansteuerung mit der Netzspannung gemäß Figur 6a für eine erfindungsgemäße Schaltungsanordnung und für drei aus dem Stand der Technik bekannte Schaltungsanordnungen; und
- Figur 7: den gemessenen zeitlichen Verlauf des Stroms durch die Schutzschaltung, die Ausgangsspannung der Schutzschaltung und die Spannung über der Begrenzungsvorrichtung bei einem realisierten Ausführungsbeispiel.

### Bevorzugte Ausführung der Erfindung

Figur 1 zeigt beispielhaft in schematischer Darstellung den Aufbau einer erfindungsgemäßen Schaltungsanordnung. Diese umfasst in serieller Anordnung eine Schaltervorrichtung 10 und eine Begrenzungsvorrichtung 12, die zusammen mit einer nichtdargestellten Ansteuerschaltung die Schutzschaltung 14 bilden. An der Schaltervorrichtung 10 fällt die Spannung U_{SE} ab, während an der Begrenzungsvorrichtung 12 die Spannung U_{BE} abfällt. Der Strom durch die Schutzschaltung 14 ist mit I bezeichnet. An der Schutzschaltung 14 der erfindungsgemäßen Schaltungsanordnung fällt die Ausgangsspannung Uₒᵤₜ ab, die als Eingangsspannung für die nachfolgend angeordnete, zu schützende Einheit dient. Weiterhin dient eine Spannung Uₛₜ der Ansteuerung der Schaltervorrichtung 10.

Figur 2 zeigt die Abhängigkeit des Stroms von der Spannung an einer in der erfindungsgemäßen Schaltungsanordnung zu verwendenden Begrenzungsvorrichtung 12, beispielsweise einem Varistor. Uₛ bezeichnet die Schutzspannung, deren Überschreiten durch die erfindungsgemäße Schaltungsanordnung verhindert werden soll. Wenn wie im Stand der Technik eine derartige Begrenzungsvorrichtung 12 ohne in Serie dazu angeordnete Schaltervorrichtung 10 verwendet wird, fließt bei der Spannung U_{N} im Normalbetrieb bereits ein bedeutender Strom I_{N}. Das Produkt aus der Spannung U_{N} und dem Strom I_{N} entspricht den Verlusten in einer derartigen Begrenzungsvorrichtung, die unerwünscht sind. Da jedoch bei der vorliegenden Erfindung solange kein Strom durch die Schutzschaltung 14 fließt, solange die Schaltervorrichtung 10 gesperrt ist, fällt bei der erfindungsgemäßen Schaltungsanordnung im Normalbetrieb keinerlei Verlust durch die Begrenzungsvorrichtung 12 an.

Figur 3 zeigt einen typischen Verlauf einer Stromspannungskennlinie an einer Schaltervorrichtung 10, insbesondere einem Schaltelement, in dem die Ansteuerungsfunktion durch das Schaltelement selbst realisiert ist, beispielsweise einen Sidac. Die Pfeile kennzeichnen den Verlauf bei ansteigender Spannung. Überschreitet die Spannung U_{SE} einen Schwellwert U_{Gr}, schaltet das Schaltelement durch, das heißt es wird leitend und die Spannung U_{SE} geht zurück auf einen Wert U_{Sel}. Anschließend wächst der Strom an und infolge der Innenwiderstände des Schaltelements beginnt die Spannung U_{SE} wieder zu wachsen. Wie für den Fachmann offensichtlich, kann die für die Erfindung nötige Funktion der Schaltervorrichtung 10 auch durch ein Schaltelement, beispielsweise einen Transistor erzielt werden, der entsprechend angesteuert wird. Die zugehörige Ansteuerschaltung wertet dann entweder den Betrag oder die Anstiegsgeschwindigkeit der Netzspannung oder einer damit korrelierten Größe aus, um das Schaltelement leitend zu schalten, und wertet den durch das Schaltelement fließenden Strom oder dessen Änderungsgeschwindigkeit oder die entsprechenden Parameter einer damit korrelierten Größe aus, um das Schaltelement wieder auf sperrend zu schalten. Schaltelemente, die jedoch bereits direkt auf die an sie anliegenden elektrischen Größen reagieren, beispielsweise Triac, Diac, Sidac, haben den Vorteil, dass die Ansteuerschaltung entfallen kann, da diese durch das Schaltelement selbst realisiert wird. Geht bei dem Schaltelement in Figur 3 der Haltestrom unter einen bestimmten Wert zurück, schaltet sich das Schaltelement von selbst wieder in den sperrenden Zustand.

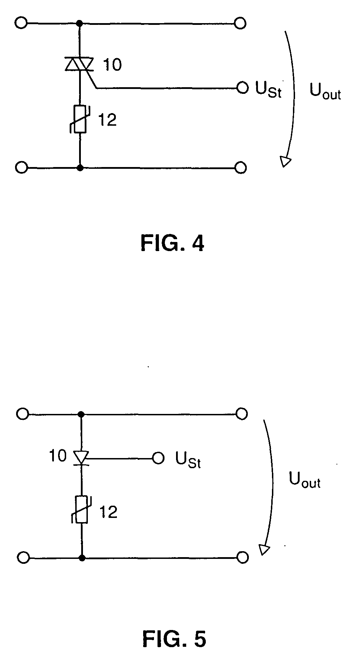

Figur 4 zeigt ein erstes Ausführungsbeispiel einer erfindungsgemäßen Schaltungsanordnung, bei der die Begrenzungsvorrichtung 12 als Varistor und die Schaltervorrichtung 10 als Triac mit einer steuernden Spannung Uₛₜ realisiert ist.

Bei dem in Figur 5 dargestellten Ausführungsbeispiel ist die Begrenzungsvorrichtung 12 wiederum als Varistor realisiert, während die Schaltervorrichtung als Thyristor mit Ansteuerschaltung (nicht dargestellt) umgesetzt ist.

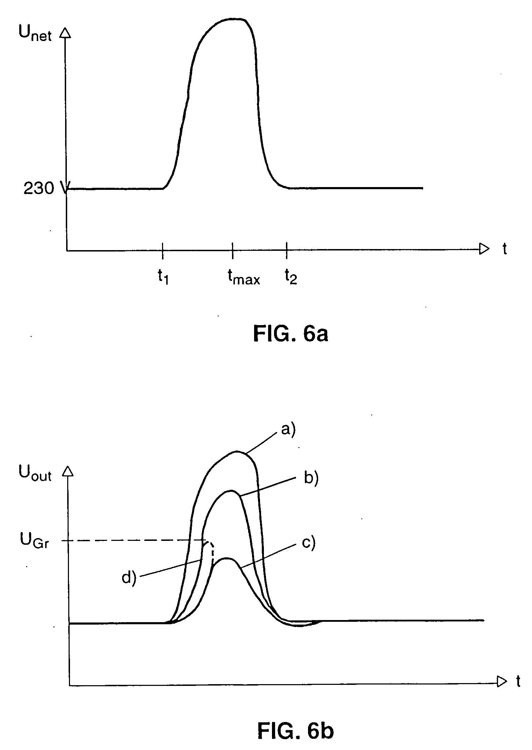

Figur 6a zeigt nunmehr den zeitlichen Verlauf der Netzspannung (beispielhaft angenommen zu 230 V), die während des Zeitraums t₁ bis t₂ von einer Stoßspannung dominiert wird, deren Maximum zum Zeitpunkt tₘₐₓ erreicht wird.

Figur 6b zeigt hierzu schematisch vier zeitliche Verläufe der Ausgangsspannung Uₒᵤₜ von drei aus dem Stand der Technik bekannten Maßnahmen und von der erfindungsgemäßen Schaltungsanordnung. Kurvenzug a) zeigt den Verlauf der Ausgangsspannung Uₒᵤₜ, wenn keinerlei Schutzmaßnahmen getroffen werden. Kurvenzug b) zeigt den Verlauf von Uₒᵤₜ, wenn lediglich ein Varistor verwendet wird, der auf 800 V dimensioniert ist. Dadurch ergibt sich zwar der Vorteil, dass im Normalbetrieb die im Varistor umgesetzte Verlustleistung recht gering ist, jedoch bietet diese Lösung, wie gut zu sehen ist, keinen ausreichenden Schutz. Kurvenzug c) zeigt den Verlauf der Ausgangsspannung Uₒᵤₜ bei Verwendung lediglich eines Varistors, der auf 400 V dimensioniert ist. Dieser bietet zwar einen geeigneten Schutz, stört jedoch im Normalbetrieb durch hohen Verlustleistungsumsatz die Performance. Kurvenzug d) zeigt den Verlauf der Ausgangsspannung bei einer erfindungsgemäßen Schaltungsanordnung: Als Schaltervorrichtung 10 wird ein Sidac verwendet, als Begrenzungsvorrichtung 12 ein auf 400 V dimensionierter Varistor. Gut zu erkennen ist, dass die Spannung zunächst auf den Wert U_{Gr} ansteigt, bevor die Schaltervorrichtung 10 auf leitend geschaltet wird und anschließend die Amplitude durch die an der Begrenzungsvorrichtung 12 abfallende Spannung dominiert wird. Deshalb decken sich die Kurvenzüge c) und d) im zweiten und dritten Drittel des Verlaufs. Allerdings stört bei einer erfindungsgemäßen Schaltungsanordnung ein auf 400 V dimensionierter Varistor den Normalbetrieb der nachfolgenden Schaltung nicht, da durch ihn infolge der im Normalzustand sperrend geschalteten Schaltervorrichtung 10 kein Strom fließt.

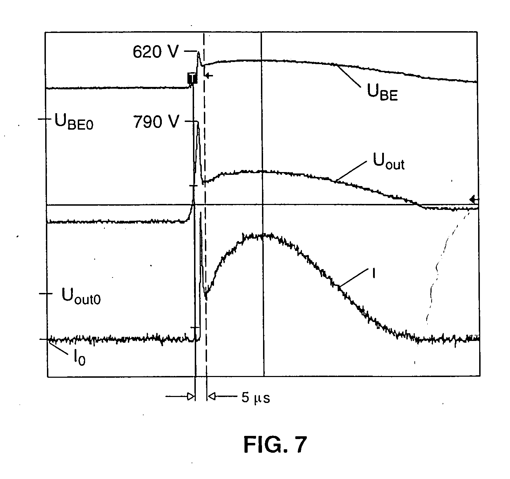

Figur 7 zeigt den zeitlichen Verlauf des Stroms I durch die Schutzvorrichtung 14, die Ausgangsspannung Uₒᵤₜ der Schutzvorrichtung sowie der Spannung U_{BE} über dem Begrenzungsnetzwerk 12 bei niederohmiger Einkopplung einer Stoßspannung von 1.000 V im Netzspannungsmaximum (gemäß Absatz 5.7 der EN 61547). Figur 7 bestätigt daher die oben mit Bezug auf Figur 6 skizzierten Tendenzen. Um einen Zeitbezug herzustellen, ist in Figur 7 um die Stoßspannung ein Zeitfenster von 5µs eingezeichnet. Zu den Verläufen des Stroms I, der Ausgangsspannung Uₒᵤₜ und der Spannung U_{BE} sind in Figur 7 die jeweiligen Bezugslinien Uₒᵤₜ₀, U_{BE0} und I₀ eingezeichnet. Zudem ist für U_{BE} der Spitzenwert 620V und für Uₒᵤₜ₀ der Spitzenwert 790V eingezeichnet.

Die erfindungsgemäße Schaltungsanordnung kann zur Erfüllung ihrer Funktion am Eingang der zu schützenden Schaltung, vor einem Netzgleichrichter, nach einem Netzgleichrichter, über der zu schützenden Baugruppe oder dem zu schützenden Bauteil oder an einer schaltungstechnisch anderen geeigneten Stelle eingesetzt werden. Bei einer geeigneten Anordnung und Dimensionierung kann die erfindungsgemäße Schaltungsanordnung den Schutz auch bei Surge-Impulsen von mehr als 3000 V gewährleisten.

## Patentansprüche

1. Schaltungsanordnung zum Schutz mindestens einer aus einem Spannungsnetz zu versorgenden Einheit gegen Stoßspannungen mit
- einem Eingang mit einem ersten und einem zweiten Eingangsanschluss, an den eine mit einer Stoßspannung belastete Spannung, die der Netzspannung entspricht oder aus der Netzspannung abgeleitet wurde, koppelbar ist,
- einem Ausgang mit einem ersten und einem zweiten Ausgangsanschluss, an den die zu schützende Einheit koppelbar ist;
- einer Schutzschaltung, die zwischen den ersten und den zweiten Eingangsoder Ausgangsanschluss gekoppelt ist, wobei die Schutzschaltung eine Begrenzungsvorrichtung aufweist, die ausgelegt ist, die an ihr anliegende Spannung auf einen vorgebbaren Wert zu begrenzen,
**dadurch gekennzeichnet,**
**dass** die Schutzschaltung weiterhin eine Schaltervorrichtung (10) umfasst, die ein Schaltelement (10) und eine Ansteuerungsschaltung für das Schaltelement (10) umfasst, wobei das Schaltelement (10) als Halbleiterbauelement ausgebildet ist, und wobei die Schaltervorrichtung (10) seriell zu der Begrenzungsvorrichtung (12) angeordnet ist und ausgelegt ist, bei einem vorgebbaren ersten Auslösekriterium auf leitend zu schalten und bei einem vorgebbaren zweiten Auslösekriterium auf sperrend zu schalten.

2. Schaltungsanordnung nach Anspruch 1,
**dadurch gekennzeichnet,**
**dass** das erste Auslösekriterium der Anstieg einer Spannung. insbesondere der an der Schaltervorrichtung (10) anliegenden Spannung, über einen ersten vorgebbaren Spannungswert und/oder die Anstiegsgeschwindigkeit einer Spannung, insbesondere der an der Schaltervorrichtung (10) anliegenden Spannung, über einen ersten vorgebbaren Wert ist.

3. Schaltungsanordnung nach Anspruch 1 oder 2,
**dadurch gekennzeichnet,**
**dass** das zweite Auslösekriterium der Abfall des durch die Schaltervorrichtung (10) fließenden Stroms unterhalb einem zweiten vorgebbaren Stromwert ist und/oder die Abfallgeschwindigkeit einer Spannung, insbesondere der an der Schaltervorrichtung (10) anliegenden Spannung, unterhalb einem zweiten vorgebbaren Wert und/oder eine vorgebbare Zeitdauer abgelaufen ist.

4. Schaltungsanordnung nach einem der vorhergehenden Ansprüche,
**dadurch gekennzeichnet,**
**dass** die Ansteuerschaltung ausgelegt ist, das Schaltelement (10) entsprechend mindestens einer an der Schaltervorrichtung (10) wirkenden elektrischen Größe oder einer damit korrelierten Größe, insbesondere Spannung, Strom, Spannungsänderungsgeschwindigkeit, Stromänderungsgeschwindigkeit, anzusteuern.

5. Schaltungsanordnung nach einem der vorhergehenden Ansprüche,
**dadurch gekennzeichnet,**
**dass** die Ansteuerschaltung vom Schaltelement (10) selbst gebildet wird.

6. Schaltungsanordnung nach einem der vorhergehenden Ansprüche,
**dadurch gekennzeichnet,**
**dass** die Begrenzungsvorrichtung (12) einen Varistor und/oder einen Widerstand und/oder eine Zenerdiode umfasst.

7. Schaltungsanordnung nach einem der vorhergehenden Ansprüche,
**dadurch gekennzeichnet,**
**dass** das Schaltelement (10) einen Triac und/oder einen Diac und/oder einen Sidac und/oder einen TSPD und/oder einen Thyristor und/oder einen IGBT und/oder eine Supressordiode und/oder eine Transildiode umfasst.

8. Schaltungsanordnung nach einem der vorhergehenden Ansprüche,
**dadurch gekennzeichnet,**
**dass** die Begrenzungsvorrichtung (12) für Dauerbetrieb auf einen Spannungswert ausgelegt ist, der unter der im Betrieb an der Schutzvorrichtung anliegenden maximalen Spannung ohne Stoßspannung liegt.

9. Verwendung einer Schaltungsanordnung nach einem der vorhergehenden Ansprüche in einem elektrischen Wandler, insbesondere in einem elektrischen Vorschaltgerät, insbesondere in einem elektrischen Vorschaltgerät für die Beleuchtungstechnik.
